# DEMANDE DE BREVET EUROPEEN

(11) **EP 3 165 811 A1**
(43) Date de publication de la demande: **10.05.2017**
(21) Numéro de dépôt: 16196157.8
(22) Date de dépôt: 28.10.2016
(51) Int. Cl.: F21S 8/10, F21V 7/00, F21Y 115/10, F21Y 115/15

(54) **DISPOSITIF LUMINEUX À DEUX FONCTIONS ET À EFFET TRIDIMENSIONNEL, NOTAMMENT POUR VÉHICULE AUTOMOBILE, ET FEU MUNI D'UN TEL DISPOSITIF LUMINEUX**

(30) Priorité: 05.11.2015 FR 1560598
(71) Demandeur: VALEO VISION, 93012 Bobigny Cedex (FR)
(72) Inventeur: DUVAL, Christophe, 77340 PONTAULT-COMBAULT (FR)

(57) **Abrégé**

L'invention concerne un dispositif lumineux (1, 10, 20) à deux fonctions, notamment pour véhicule automobile, comprenant une première (2, 12, 22) et une deuxième (3, 13, 23) source de lumière, un réflecteur de lumière (4, 14, 24) et un miroir semi-réfléchissant (5, 15, 25), le dispositif étant configuré pour que la première source (2, 12, 22) soit apte à émette vers le miroir semi-réfléchissant (5, 15, 25) un premier faisceau lumineux (6, 16, 26), de sorte qu'une première fraction (7, 17, 27) du premier faisceau soit transmise par le miroir en sortie du dispositif et qu'une seconde fraction (8, 18, 28) du premier faisceau soit réfléchie vers le réflecteur (4, 14, 24), le réflecteur étant agencé pour renvoyer la seconde fraction vers le miroir semi-réfléchissant (5, 15, 25) pour dupliquer le motif lumineux du premier faisceau lumineux en sortie du dispositif, le dispositif étant configuré en outre pour que la deuxième source (3, 13, 23) soit apte à émettre un deuxième faisceau lumineux (9, 19, 29) orienté sensiblement selon un même axe optique (Ox) que le premier faisceau en sortie du dispositif, une des deux sources lumineuses étant une source lumineuse surfacique et l'autre source étant une source lumineuse sensiblement ponctuelle.

## Description

La présente invention concerne un dispositif lumineux à deux fonctions et à effet tridimensionnel, notamment pour véhicule automobile. L'invention concerne également un feu muni d'un tel dispositif lumineux.

Les feux de véhicule automobile, généralement situés à l'arrière du véhicule, sont des dispositifs lumineux qui comprennent une ou plusieurs sources de lumière et une glace qui ferme le feu. De façon simplifiée, la source lumineuse émet des rayons lumineux pour former un faisceau lumineux qui est dirigé vers la glace afin de produire une plage éclairante qui transmet la lumière à l'extérieur du véhicule. La couleur de la plage éclairante est caractéristique de la fonction ou du type de feu. Ainsi, on sait qu'une plage éclairante de couleur blanche indique que le feu est un feu de marche arrière, qu'une plage éclairante de couleur ambre est un indicateur de direction, et qu'une plage éclairante de couleur rouge est un feu de position arrière ou un feu stop, le feu stop étant d'une couleur plus intense. Il existe aussi les feux rouges antibrouillard, dont l'intensité est encore plus forte pour être visible dans des conditions climatiques difficiles, telles que du brouillard, des fortes pluies ou des chutes de neige. En plus de la couleur, ces feux doivent répondre à des réglementations d'intensité et de visibilité notamment.

Ainsi, l'arrière d'un véhicule comporte une pluralité de glaces, chaque glace ayant une couleur propre à chaque fonction. La source de lumière a une intensité lumineuse choisie par rapport au type de feu. Chacune des glaces étant en outre illuminée par au moins une source lumineuse différente, on multiplie le nombre de dispositifs lumineux sur le véhicule. Les sources lumineuses sont par exemple des diodes électroluminescentes. La configuration et le positionnement des sources et des glaces sont donc limités.

Pour résoudre ce problème, il existe des dispositifs qui permettent de combiner plusieurs fonctions à un feu, notamment en utilisant une seule glace sur laquelle des sources lumineuses distinctes projettent des faisceaux lumineux différents, chaque faisceau correspondant à une fonction différente de feu.

D'autre part, on connaît aussi des dispositifs capables de produire des effets visuels tridimensionnels de l'éclairage. Le document EP1916471 montre un dispositif qui associe des sources lumineuses à un miroir semi-réfléchissant et un réflecteur. Les faisceaux produits par les sources sont projetés sur le miroir semi- réfléchissant, qui transmet en aval une première partie du faisceau lumineux vers l'extérieur du dispositif, et qui réfléchit la deuxième partie vers le réflecteur situé en amont du miroir. La partie réfléchie est renvoyée par le réflecteur sur le miroir semi-réfléchissant de façon décalée, afin d'y être de nouveau divisée en une partie transmise vers l'extérieur et une autre partie réfléchie vers le réflecteur, et ceci de manière itérative. Ainsi, le faisceau subit des divisions et réflexions multiples entre le miroir et le réflecteur, de sorte qu'on obtient de multiples répétitions du motif lumineux de la source lumineuse. Ceci provoque un effet visuel en sortie du dispositif, qui donne une impression de profondeur tridimensionnelle du feu.

Or, il n'existe pas actuellement de dispositif capable de combiner plusieurs fonctions dont au moins l'une desdites fonctions a un effet tridimensionnel en sortie du dispositif.

Le but de l'invention est de remédier à cette absence, et vise à fournir un dispositif lumineux configuré pour simplifier le nombre de feux lumineux sur un véhicule et d'apporter de nouvelles possibilités de disposition et de design, pour pouvoir produire un ou plusieurs effets visuels tridimensionnels.

Pour cela, l'invention se rapporte à un dispositif lumineux à deux fonctions, notamment pour véhicule automobile, comprenant une première et une deuxième source de lumière, un réflecteur de lumière et un miroir semi-réfléchissant, le dispositif étant configuré pour que la première source soit apte à émette vers le miroir semi-réfléchissant un premier faisceau lumineux, de sorte qu'une première fraction du premier faisceau soit transmise par le miroir en sortie du dispositif et qu'une seconde fraction du premier faisceau soit réfléchie vers le réflecteur, le réflecteur étant agencé pour renvoyer la seconde fraction vers le miroir semi-réfléchissant pour dupliquer le motif lumineux du premier faisceau lumineux en sortie du dispositif, le dispositif étant configuré en outre pour que la deuxième source soit apte à émettre un deuxième faisceau lumineux orienté sensiblement selon le même axe optique que le premier faisceau en sortie du dispositif, une des deux sources lumineuses étant une source lumineuse surfacique et l'autre source étant une source lumineuse sensiblement ponctuelle.

Ainsi, avec un seul dispositif, on peut d'une part utiliser la première source pour une première fonction avec un effet tridimensionnel, et utiliser d'autre part la deuxième source pour une deuxième fonction.

Grâce à l'invention, on réduit la surface utilisable nécessaire pour chaque fonction de feu sur le véhicule, car les deux faisceaux sont projetés sensiblement selon le même axe optique, et donc à travers une glace unique. On peut aussi créer des effets visuels particuliers en combinant les deux fonctions simultanément.

Selon différents modes de réalisation de l'invention, qui pourront être pris ensemble ou séparément :
- la première source lumineuse est la source ponctuelle et la seconde source lumineuse est la source surfacique,
- la source surfacique est une diode électroluminescente organique comprenant une couche semi-réfléchissante sur la face arrière, cette couche définissant le miroir semi-réfléchissant du dispositif,
- la couche semi-réfléchissante est formée par un revêtement déposé sur une électrode arrière de l'OLED,
- la couche semi-réfléchissante est formée par une électrode arrière de l'OLED,
- la source ponctuelle, la source surfacique et le réflecteur sont disposés les uns par rapport aux autres de sorte que la première fraction et au moins une partie de la seconde fraction réfléchie traversent la source surfacique,
- le réflecteur est disposé en amont de la source surfacique, la source surfacique étant disposée en sortie du dispositif,
- le réflecteur est convexe et l'OLED est plane,
- la source surfacique est convexe,
- la source surfacique est une diode électroluminescente organique comprenant une couche réfléchissante sur la face arrière, cette couche définissant le réflecteur du dispositif,
- le miroir semi-réfléchissant est agencé en aval de la source surfacique,
- la source surfacique, le réflecteur et le miroir sont disposés les uns par rapport aux autres de sorte qu'au moins une partie du deuxième faisceau traverse le miroir semi-réfléchissant,
- le miroir semi-réfléchissant est convexe et l'OLED est plane,
- la première source lumineuse est la source surfacique et la seconde source lumineuse est la source ponctuelle,
- la source surfacique est une diode électroluminescente organique comprenant une couche réfléchissante sur la face arrière, la couche réfléchissante définissant le réflecteur du dispositif,
- ledit dispositif comprend un guide de lumière agencé en aval de la source surfacique, le guide de lumière comprenant une face arrière semi-transparente définissant le miroir semi-réfléchissant du dispositif, le guide de lumière étant configuré pour guider le deuxième faisceau lumineux depuis une face d'entrée jusqu'à une face de sortie du guide,
- le guide de lumière comprend des motifs de découplage sur la face arrière, de manière à dévier le deuxième faisceau lumineux vers la face de sortie, la face de sortie étant sensiblement parallèle à la face arrière,
- la source ponctuelle est une diode électroluminescente sans couche organique,
- ledit dispositif est configuré pour que la seconde fraction du premier faisceau subisse des divisions multiples en transmission et réflexion entre le réflecteur et le miroir semi-réfléchissant de manière à reproduire plusieurs fois le motif lumineux du premier faisceau en sortie du dispositif.
- le miroir semi-réfléchissant et le réflecteur sont sensiblement parallèles,
- ils sont sensiblement parallèles, que le miroir et le réflecteur soient plans, ou que le miroir et le réflecteur soient courbes,
- dans le cas où ils sont courbes, le miroir et le réflecteur présentent des profils identiques,
- le miroir semi-réfléchissant a un coefficient de réflexion d'au moins 5%, de préférence 40%, voire 50%,
- le réflecteur présente un coefficient de réflexion d'au moins 70%,
- le miroir semi-réfléchissant est agencé en sortie du dispositif,
- le premier faisceau lumineux correspond à une première fonction réglementaire prédéterminée d'un feu de véhicule automobile,
- le deuxième faisceau lumineux correspond à une deuxième fonction réglementaire prédéterminée d'un feu de véhicule automobile,
- le premier et le deuxième faisceau lumineux émis simultanément correspondent à une troisième fonction réglementaire prédéterminée d'un feu de véhicule automobile,
- la source surfacique est une source de lumière présentant une surface d'émission dont les dimensions sont sensiblement supérieures à l'épaisseur de ladite source surfacique,
- la source sensiblement ponctuelle est une source présentant une surface d'émission dont les dimensions sont négligeables par rapport à celles de la source surfacique.

L'invention se rapporte également à un feu de véhicule automobile, notamment nocturne, comprenant un dispositif lumineux à deux fonctions et à effet tridimensionnel.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre de façon schématique, une vue en coupe d'un dispositif lumineux à deux fonctions selon un premier mode de réalisation,
- la figure 2 illustre de façon schématique, une vue en coupe d'un dispositif lumineux à deux fonctions selon un deuxième mode de réalisation,
- la figure 3 illustre de façon schématique, une vue en coupe d'un dispositif lumineux à deux fonctions selon un troisième mode de réalisation.

Pour la description suivante, on définit une source surfacique comme une surface émettrice de lumière de préférence d'au moins 1 cm² et jusqu'à plusieurs dizaines, voire centaines de cm², et une source ponctuelle comme une surface émettrice de lumière de préférence de moins 1 cm². La source surfacique est de préférence une source de lumière présentant une surface d'émission dont les dimensions sont sensiblement supérieures à l'épaisseur de ladite source surfacique. La source sensiblement ponctuelle est de préférence une source présentant une surface d'émission dont les dimensions sont négligeables par rapport à celles de la source surfacique.

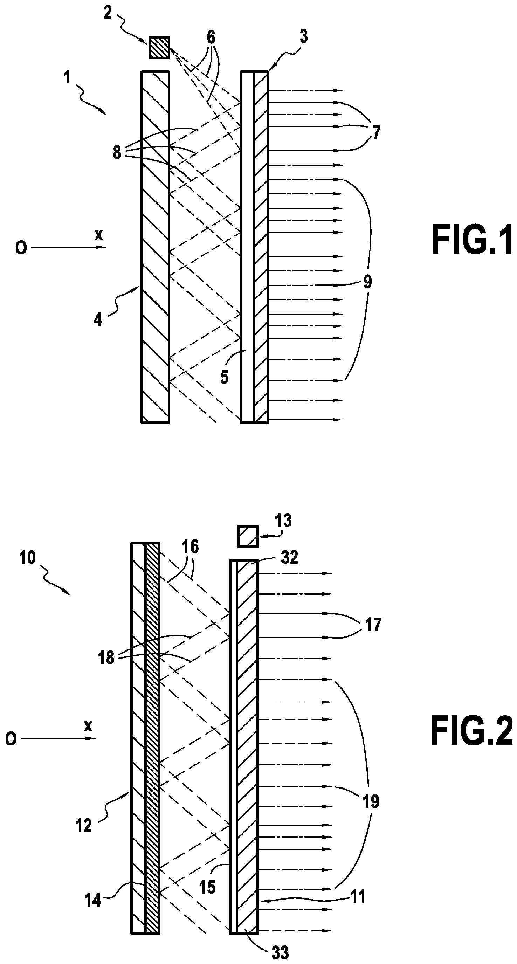

Dans les trois modes de réalisation des figures 1, 2 et 3, le dispositif lumineux à deux fonction, notamment pour un feu de véhicule automobile, comprend une première 2, 12, 22 et une deuxième 3, 13, 23 source de lumière, un réflecteur de lumière 4, 14, 24 et un miroir semi-réfléchissant 5, 15, 25. Le réflecteur de lumière 4, 14, 24 est disposé en amont du miroir semi-réfléchissant 5, 15, 25 selon l'axe optique Ox des faisceaux en sortie du dispositif 1, 10, 20.

Le dispositif est configuré pour que la première source 2, 12, 22 soit apte à émettre vers le miroir semi-réfléchissant 5, 15, 25 un premier faisceau lumineux 6, 16, 26 correspondant à une première fonction réglementaire prédéterminée d'un feu de véhicule automobile, de sorte qu'une première fraction 7, 17, 27 du premier faisceau soit transmise par le miroir en sortie du dispositif et qu'une seconde fraction 8, 18, 28 du premier faisceau 6, 16, 26 soit réfléchie vers le réflecteur 4, 14, 24. Le réflecteur est agencé pour renvoyer la seconde fraction vers le miroir semi-réfléchissant 5, 15, 25 pour dupliquer le motif lumineux du premier faisceau lumineux en sortie du dispositif.

Ledit dispositif 1 est de plus configuré pour que la seconde fraction 8, 18, 28 du premier faisceau 6, 16, 26 subisse des divisions multiples en sous-fractions transmises et réfléchies entre le réflecteur 4, 14, 24 et le miroir semi-réfléchissant 5, 15, 25 de manière à reproduire plusieurs fois le motif lumineux du premier faisceau 6, 16, 26 en sortie du dispositif 1, 11, 21.

Le dispositif est en outre configuré pour que la deuxième source 3, 13, 23 soit apte à émettre un deuxième faisceau lumineux 9, 19, 29 correspondant à une deuxième fonction réglementaire prédéterminée d'un feu de véhicule automobile et orienté en sortie du dispositif sensiblement selon le même axe optique Ox que le premier faisceau.

En outre, lorsque le premier et le deuxième faisceau lumineux sont émis simultanément, la combinaison des deux faisceaux correspond de préférence à une troisième fonction réglementaire prédéterminée d'un feu de véhicule automobile.

Le miroir semi-réfléchissant 5, 15, 25 a un coefficient de réflexion d'au moins 5%, de préférence 40%, voire 50%, et le réflecteur 4, 14, 24 de lumière a, de préférence, un coefficient de réflexion d'au moins 70%. Le réflecteur présente de préférence un coefficient de réflexion d'au moins 70%.

On appelle diode électroluminescente « courante », une diode formée essentiellement de couches semi-conductrices non-organiques. Il s'agit des diodes électroluminescentes que l'on retrouve couramment aujourd'hui commercialement, par opposition aux diodes électroluminescentes organiques de type « OLED » (pour « Organic Light-Emmitting Diode » en anglais). Une diode électroluminescente organique est dotée en général d'une superposition de plusieurs couches semi-conductrices organiques.

Comme illustré sur le dispositif 1 de la figure 1, la première source lumineuse 2 est une source ponctuelle, et la deuxième source lumineuse 3 est une source surfacique. La source ponctuelle est par exemple une diode électroluminescente courante, et la source surfacique est, de préférence, une diode électroluminescente organique de type OLED.

La face arrière de la diode électroluminescente organique est semi-réfléchissante, de manière à servir de miroir semi-réfléchissant 5 du dispositif 1 pour ce mode de réalisation. La face arrière est définie par rapport à la direction d'émission de lumière par la diode, ici selon l'axe optique Ox. La deuxième source lumineuse 3 surfacique est agencée en sortie du dispositif 1, de sorte que les faisceaux lumineux 7, 9 qui sortent du dispositif proviennent de la source surfacique.

En variante de réalisation, non représentée sur les figures, la couche semi-réfléchissante est formée par un revêtement déposé sur l'électrode arrière de l'OLED.

Le dispositif 1 comprend en outre un réflecteur 4 de lumière disposé en amont de la source surfacique par rapport à l'axe Ox, de sorte que le réflecteur 4 et la deuxième source 3 surfacique, et donc le miroir semi-réfléchissant 5, soient en vis-à-vis. Ils peuvent notamment être sensiblement parallèles et centrés selon le même axe optique Ox. Ici, le réflecteur 4 est un élément « indépendant », c'est-à-dire qu'il ne fait pas partie d'un des autres éléments mentionnés du dispositif 10.

Un espace entre le réflecteur 4 et la deuxième source lumineuse 3 surfacique permet à la première source 2 ponctuelle d'émettre un premier faisceau 6 de lumière entre le réflecteur 4 et la deuxième source lumineuse 3 surfacique, en direction du miroir semi-réfléchissant 5. La première source 2 ponctuelle est ici disposée à côté du réflecteur 4, et orientée vers la deuxième source lumineuse 3 surfacique.

Ainsi, le premier faisceau lumineux 6, correspondant à une première fonction d'un feu, est émis vers le miroir semi-réfléchissant 5 de la deuxième source 3 surfacique avec un angle d'incidence déterminé. Une première fraction 7 du premier faisceau 6 est transmise par le miroir-semi-réfléchissant 5 en sortie du dispositif 1. Autrement dit, la première fraction 7 traverse la deuxième source 3 surfacique.

Une seconde fraction 8 du premier faisceau 6 est réfléchie par le miroir semi-réfléchissant 5 de la deuxième source 3 surfacique vers le réflecteur 4. La seconde fraction 8 est renvoyée par le réflecteur 4 vers le miroir semi-réfléchissant 5 pour être divisée à nouveau par le miroir en une sous-fraction transmise en sortie du dispositif 1 et en une sous-fraction réfléchie vers le réflecteur 5.

Ainsi, le motif lumineux du premier faisceau lumineux 6 est dupliqué en sortie du dispositif 1. Ledit dispositif 1 est de plus configuré pour que la seconde fraction 8 du premier faisceau 6 subisse des divisions multiples en sous-fractions transmises et réfléchies entre le réflecteur 4 et le miroir semi-réfléchissant 5 de manière à reproduire plusieurs fois le motif lumineux du premier faisceau 6 en sortie du dispositif 1. Par la répétition multiple du motif lumineux, on obtient un effet tridimensionnel du motif lumineux du premier faisceau 6 en sortie du dispositif 1.

En outre, la deuxième source surfacique 3 est apte à émettre un deuxième faisceau lumineux 9 correspondant à une deuxième fonction d'un feu. Le deuxième faisceau 9 est orienté sensiblement selon le même axe optique Ox que le premier faisceau en sortie du dispositif 1. Autrement dit, la deuxième source surfacique 3 émet directement le deuxième faisceau lumineux 9, sans avoir à traverser le miroir semi-réfléchissant 5. Ainsi, la deuxième source surfacique 3 comprend une face de sortie opposée à la face arrière, et par laquelle sont transmises les fractions 7 du premier faisceau lumineux 6 qui traversent la deuxième source surfacique 3, et par laquelle est émis le deuxième faisceau 9 lumineux de la deuxième source surfacique 3.

Dans le mode de réalisation du dispositif 10 de la figure 2, la première source lumineuse 12 est une source surfacique et la seconde source lumineuse 13 est une source ponctuelle. La source surfacique est de préférence une diode électroluminescente organique, et la source ponctuelle est de préférence une diode électroluminescente courante. La première source lumineuse 12 surfacique est disposée en amont de la seconde source lumineuse 13 ponctuelle selon l'axe optique Ox.

Ici, la face arrière de la première source lumineuse 12 surfacique est munie d'une couche réfléchissante formant le réflecteur 14 du dispositif 10. La première source lumineuse 12 surfacique est apte à émettre un premier faisceau lumineux 16 correspondant à une première fonction d'un feu.

La seconde source lumineuse 13 ponctuelle est apte à émettre un deuxième faisceau lumineux 19 correspondant à une deuxième fonction d'un feu, de sorte que le deuxième faisceau lumineux 19 soit orienté sensiblement selon le même axe optique Ox que le premier faisceau en sortie du dispositif 10.

A cette fin, le dispositif 10 comprend un guide de lumière 11 pour guider le deuxième faisceau lumineux 19 depuis une face d'entrée 32 jusqu'à une face de sortie 33 du guide de lumière. Le guide 11 a par exemple une forme de parallélépipède sensiblement plat. La source ponctuelle est disposée à proximité de la face d'entrée 32 du guide 11, ici une tranche du guide plat. Le guide 11 comprend aussi une face arrière semi-transparente définissant le miroir semi-réfléchissant 15 du dispositif 10. La face de sortie est en outre sensiblement parallèle à la face arrière. Le guide de lumière 11 est agencé en aval de la première source lumineuse 12 surfacique selon l'axe Ox, de manière à être en vis-à-vis de la première source lumineuse 12. Le guide de lumière 11 et la première source lumineuse 12 sont par exemple sensiblement parallèles.

Le guide de lumière comprend, de préférence, des motifs de découplage sur la face arrière, qui ne sont pas représentés sur la figure. Les motifs de découplage servent à dévier vers la face de sortie les rayons lumineux du deuxième faisceau lumineux passant dans le guide. Ainsi, la seconde source lumineuse 13 ponctuelle émet le deuxième faisceau dans le guide 11 par la face d'entrée 32, et le faisceau est guidé par réflexion dans le guide 11. Lorsque les rayons du faisceau lumineux rencontrent les motifs de découplage de la face arrière, ils sont diffusés vers la face de sortie du guide 11. Les motifs de découplage sont par exemple des aspérités agencés sur la face arrière du guide 11.

De manière analogue au premier mode de réalisation, le premier faisceau lumineux 16 est dirigé vers le miroir semi-réfléchissant 15 de la face arrière du guide de lumière 11 de sorte qu'une première fraction 17 du premier faisceau soit transmise à travers le guide en sortie du dispositif 10 et qu'une seconde fraction 18 du premier faisceau 16 soit réfléchie vers la première source lumineuse 12 surfacique. Le réflecteur 14 de la première source lumineuse 12 surfacique renvoie la seconde fraction 18 vers le miroir semi-réfléchissant 15 du guide 11 pour dupliquer le motif lumineux du premier faisceau lumineux 16 en sortie du dispositif 10. De plus, la première source lumineuse 12 surfacique est avantageusement convexe pour accentuer l'effet tridimensionnel.

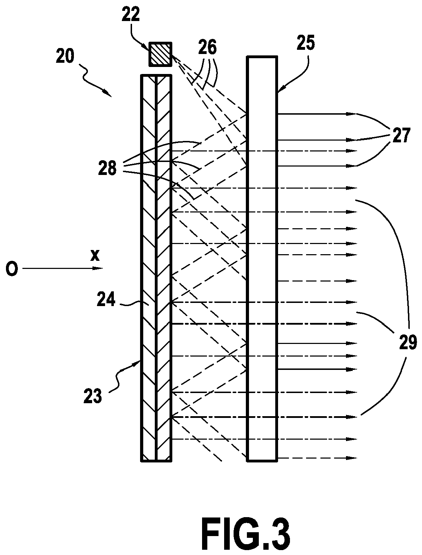

La figure 3 montre un troisième mode de réalisation d'un dispositif lumineux 20 double fonction à effet tridimensionnel, dans lequel la première source de lumière 22 est une source ponctuelle, par exemple une diode électroluminescente courante, et la deuxième source de lumière 23 est une source surfacique, de préférence une diode électroluminescente organique. Le dispositif 20 comprend en plus un miroir semi-réfléchissant 25 agencé en aval de la deuxième source de lumière 23 surfacique selon un axe optique Ox. Ici, le miroir semi-réfléchissant 25 est un élément « indépendant », c'est-à-dire qu'il ne fait pas partie d'un des autres éléments mentionnés du dispositif 20. Le miroir semi-réfléchissant 25 peut être convexe pour accentuer l'effet tridimensionnel.

La deuxième source de lumière 23 surfacique et le miroir semi-réfléchissant 25 sont espacés en vis-à-vis, voire sensiblement parallèles, et sensiblement centrés selon le même axe optique Ox. Ainsi, le deuxième faisceau 28 de la deuxième source de lumière 23 surfacique est transmis par le miroir semi-réfléchissant 25 en sortie du dispositif 20 selon l'axe optique Ox. La première source de lumière 22 ponctuelle est ici disposée à côté de la source surfacique, et elle est orientée de manière à émettre le premier faisceau 26 vers le miroir semi-réfléchissant 25.

La diode électroluminescente organique comprend ici une couche réfléchissante sur la face arrière, afin de servir de réflecteur 24 du dispositif 20 pour le premier faisceau lumineux 26. Comme dans les deux modes de réalisation précédents, une première fraction 27 du premier faisceau 26 est transmise par le miroir-semi-réfléchissant 5 en sortie du dispositif 20. Une seconde fraction 28 du premier faisceau 26 est réfléchie par le miroir semi-réfléchissant 25 vers le réflecteur 24 de la deuxième source de lumière 23 surfacique. La seconde fraction 28 est renvoyée par le réflecteur 4 vers le miroir semi-réfléchissant 25 pour être divisée à nouveau par le miroir en une sous-fraction transmise en sortie du dispositif 1 et en une sous-fraction réfléchie vers le réflecteur 5. Le premier faisceau subit ainsi des divisions multiples en sous-fractions transmises et réfléchies entre le réflecteur 24 de la deuxième source de lumière 23 surfacique et le miroir semi-réfléchissant 25 de manière à reproduire plusieurs fois le motif lumineux du premier faisceau en sortie du dispositif 20.

## Revendications

1. Dispositif lumineux (1, 10, 20) à deux fonctions, notamment pour véhicule automobile, comprenant une première (2, 12, 22) et une deuxième (3, 13, 23) source de lumière, un réflecteur de lumière (4, 14, 24) et un miroir semi-réfléchissant (5, 15, 25), le dispositif étant configuré pour que la première source (2, 12, 22) soit apte à émette vers le miroir semi-réfléchissant (5, 15, 25) un premier faisceau lumineux (6, 16, 26), de sorte qu'une première fraction (7, 17, 27) du premier faisceau soit transmise par le miroir en sortie du dispositif et qu'une seconde fraction (8, 18, 28) du premier faisceau soit réfléchie vers le réflecteur (4, 14, 24), le réflecteur étant agencé pour renvoyer la seconde fraction vers le miroir semi-réfléchissant (5, 15, 25) pour dupliquer le motif lumineux du premier faisceau lumineux en sortie du dispositif, le dispositif étant configuré en outre pour que la deuxième source (3, 13, 23) soit apte à émettre un deuxième faisceau lumineux (9, 19, 29) orienté sensiblement selon un même axe optique (Ox) que le premier faisceau en sortie du dispositif, une des deux sources lumineuses étant une source lumineuse surfacique et l'autre source étant une source lumineuse sensiblement ponctuelle.

2. Dispositif selon la revendication 1, dans lequel la première source lumineuse (2, 22) est la source ponctuelle et la seconde source lumineuse (3, 23) est la source surfacique.

3. Dispositif selon la revendication 2, dans lequel la source surfacique est une diode électroluminescente organique comprenant une couche semi-réfléchissante sur la face arrière, cette couche définissant le miroir semi-réfléchissant (5) du dispositif.

4. Dispositif selon la revendication 2 ou 3, dans lequel le réflecteur (4) est disposé en amont de la source surfacique, la source surfacique étant disposée en sortie du dispositif.

5. Dispositif selon la revendication 2, dans lequel la source surfacique est une diode électroluminescente organique comprenant une couche réfléchissante sur la face arrière, cette couche définissant le réflecteur (14) du dispositif.

6. Dispositif selon la revendication 5, dans lequel le miroir semi-réfléchissant (25) est agencé en aval de la source surfacique.

7. Dispositif selon la revendication 1, dans lequel la première source lumineuse (12) est la source surfacique et la seconde source lumineuse (13) est la source ponctuelle.

8. Dispositif selon la revendication 7, dans lequel la source surfacique est une diode électroluminescente organique comprenant une couche réfléchissante sur la face arrière, la couche réfléchissante définissant le réflecteur (14) du dispositif.

9. Dispositif selon l'une quelconque des revendications 7 et 8, comprenant un guide de lumière (11) agencé en aval de la source surfacique, le guide de lumière (11) comprenant une face arrière semi-transparente définissant le miroir semi-réfléchissant (15) du dispositif, le guide de lumière étant configuré pour guider le deuxième faisceau lumineux depuis une face d'entrée (32) jusqu'à une face de sortie (33) du guide.

10. Dispositif selon la revendication 9, dans lequel le guide de lumière (11) comprend de motifs de découplage sur la face arrière, de manière à dévier le deuxième faisceau lumineux (19) vers la face de sortie, la face de sortie (33) étant sensiblement parallèle à la face arrière.

11. Dispositif selon l'une quelconque des revendications précédentes, dans lequel la source ponctuelle est une diode électroluminescente sans couche organique.

12. Dispositif selon l'une quelconque des revendications précédentes, configuré pour que la seconde fraction (8, 18, 28) du premier faisceau (6, 16, 17) subisse des divisions multiples en transmission et réflexion entre le réflecteur (4, 14, 24) et le miroir semi-réfléchissant (5, 15, 25) de manière à reproduire plusieurs fois le motif lumineux du premier faisceau en sortie du dispositif.

13. Dispositif selon l'une quelconque des revendications précédentes, dans lequel le miroir semi-réfléchissant (5, 15, 25) et le réflecteur (4, 14, 24) sont sensiblement parallèles.

14. Dispositif selon l'une quelconque des revendications précédentes, dans lequel le miroir semi-réfléchissant (5, 15, 25) a un coefficient de réflexion d'au moins 5%, de préférence 40%, voire 50%.

15. Feu de véhicule automobile comprenant un dispositif lumineux (1, 10, 20) selon l'une quelconque des revendications précédentes.
